# EUROPÄISCHE PATENTANMELDUNG

(11) **EP 1 874 009 A1**
(43) Veröffentlichungstag der Anmeldung: **02.01.2008**
(21) Anmeldenummer: 06013183.6
(22) Anmeldetag: 27.06.2006
(51) Int. Cl.: H04M 1/03, H04M 1/725

(54) **Telefon mit einem Grundgerät und einem schnurgebundenen/schnurlosen Handgerät**

(71) Anmelder: Aastra DeTeWe GmbH, 10997 Berlin (DE)
(72) Erfinder: Wesenberg, Thomas, 25337 Elmshorn (DE)
(74) Vertreter: Fischer, Uwe

(57) **Zusammenfassung**

Die Erfindung bezieht sich u. a. auf ein Telefon (10) mit einem Grundgerät (20) mit einer Schnittstelle (70) zum Anschluss an ein Telekommunikationsnetz (90) und einem Handgerät (30), das eine Lautsprechereinrichtung (110) und ein Mikrofon (140) aufweist, wobei das Handgerät und das Grundgerät über eine elektrische Anschlussleitung (100) miteinander elektrisch verbindbar sind, um über diese Sprachsignale (Se) von dem Handgerät zu dem Grundgerät und umgekehrt auf elektrischem Wege zu übermitteln.

Erfindungsgemäß ist vorgesehen, dass das Grundgerät und das Handgerät jeweils zumindest eine Funkeinrichtung (200, 250, 640a, 640b, 640c, 690d) aufweisen, wobei die Funkeinrichtung (250) des Handgeräts und die Funkeinrichtung (200, 640a, 640b, 640c, 640d) des Grundgeräts geeignet sind, eine Funkverbindung (260) zueinander herzustellen und - im Falle einer Auftrennung der elektrischen Verbindung zwischen dem Handgerät und dem Grundgerät- die Sprachsignale von dem Handgerät zu dem Grundgerät und umgekehrt über die Funkverbindung zu Übermitteln.

## Beschreibung

Die Erfindung bezieht sich auf ein Telefon mit den Merkmalen gemäß dem Oberbegriff des Anspruchs 1.

Derartige Telefone sind seit Jahrzehnten bekannt. Sie weisen ein Grundgerät mit einer Schnittstelle auf, mit der sich das Telefon an das öffentliche Telefonnetz anschließen lässt, beispielsweise in analoger Form oder in digitaler Form, zum Beispiel nach dem ISDN-Standard. An das Grundgerät ist über eine elektrische Anschlussleitung ein Handgerät, umgangssprachlich auch "Telefonhörer" genannt, angeschlossen, das mit einer Lautsprerhereinrichtung und einem Mikrofon ausgeStattet ist. Die Sprachsignale werden von dem Handgerät zu dem Grundgerät und umgekehrt über die elektrische Anschlussleitung auf elektrischem Wege bzw. mittels elektrischer Signale übermittelt.

Daneben sind so genannte schnurlose Telefone nach dem DECT-Standard bekannt, bei denen das Grundgerät und der "Telefonhörer" über eine Funkverbindung verbunden sind und über diese ihre Sprachsignale übermitteln.

Der Erfindung liegt die Aufgabe zugrunde, ein Telefon der eingangs angegebenen Art derart weiterzuentwickeln, dass es einen noch großen Benutzungskomfort als bisherige Telefone bietet.

Diese Aufgabe wird ausgehend von einem Telefon der eingangs angegebenen Art erfindungsgemäß durch die kennzeichnenden Merkmale des Anspruchs 1 gelöst. Vorteilhafte Ausgestaltungen des erfindungsgemäßen Telefons sind in Unteransprüchen angegeben.

Danach ist erfindungsgemäß vorgesehen, dass das Grundgerät und das Handgerät jeweils zumindest eine Funkeinrichtung aufweisen, wobei die Funkeinrichtung des Handgeräts und die Funkeinrichtung des Grundgeräts geeignet sind, eine Funkverbindung zueinander herzustellen und die Sprachsignale von dem Handgerät zu dem Grundgerät und umgekehrt über die Funkverbindung zu übermitteln, falls die elektrische Verbindung zwischen dem Handgerät und dem Grundgerät aufgetrennt ist.

Ein wesentlicher vorteil des erfindungsgemäßen Telefone ist darin zu sehen, dass dieses einen sehr großen Benutzungskomfort bietet; dies ist konkret darauf zurückzuführen, dass neben der leitungsgebundenen elektrischen Betriebsart eine schnurlose Funkbetriebsart vorgesehen ist, die das Führen von Telefonaten auch dann ermöglicht, wenn das Handgerät von dem Grundgerät räumlich getrennt ist. Das erfindungsgemäße Telefon ermöglicht somit einen Bedienungskomfort, wie er von schnurlosen Telefonen her bekannt ist.

Ein weiterer wesentlicher Vorteil des erfindungsgemäßen Telefons ist darin zu sehen, dass eine unnötige Strahlungsbelastung des Benutzers vermieden wird. Bei dem erfindungsgemäßen Telefon können die Sprachsignale von dem Handgerät zu dem Grundgerät und umgekehrt nämlich über die elektrische Anschlussleitung und somit strahlungsfrei übertragen werden, wenn eine elektrische Verbindung über die elektrische Anschlussleitung besteht. Nur in dem Falle, dass das Handgerät und das Grundgerät voneinander räumlich getrennt sind und nicht mehr über die Anschlussleitung miteinander elektrisch in Verbindung stehen, sind die beiden Funkeinrichtungen zu aktivieren und elektromagnetische Strahlung zu erzeugen, beispielsweise dauerhaft gemäß DECT-, GSM-, UMTS- oder WLAN-Standard oder aber zumindest jeweils dann, wenn ein Telefonat übertragen werden soll. Die Belastung des Benutzers durch e-lektromagnetischc Strahlung wird somit aul ein Minimum reduziert, wobei dennoch ein maximaler Benutzungskomfort erhalten bleibt.

Besteht bereits eine Telefonverbindung, so werden die beiden Funkeinrichtungen vorzugsweise bereits aktiviert, noch bevor die elektrische Verbindung unterbrochen wird und das Handgerät und das Grundgerät voneinander räumlich getrennt werden; durch diese Maßnahme werden Aussetzer oder ein Knacken während einer bestehenden Sprachverbindung vermieden.

Um ein Anschließen und Abkoppeln des Handgerätes vom Grundgerät für den Benutzer so einfach wie möglich zu gestalten, ist gemäß einer vorteilhaften Ausgestaltung des Telefons vorgesehen, die Anschlussteitung an einem Leitungsende mit einer benutzerseitig bedienbaren Steckeinrichtung auszustatten, mit der sich die Anschlussleitung an das Handgerät anschließen und von diesem wieder trennen lässt. Der Benutzer hat somit die Möglichkeit, durch ein Anstecken der Anschlussleitung an das Handgerät eine Übertragung der Sprachsignale auf elektrischem Wege hervorzurufen und durch ein Abkoppeln der steckeinrichtung vom Handgerät eine Funkverbindung zu wählen. Bei dieser Ausgestaltung ist die benutzerseitig bedienbare Steckeinrichtung an dem dem Handgerät zugeordneten Ende der Anschlussleitung angebracht, so dass bei einem Auftrennen der Verbindung das Anschlusskabel an dem Grundgerät zurückbleibt. Das Handgerät kann somit ohne die Anschlussleitung mitgeführt werden. Alternativ ist es selbstverständlich auch möglich, eine entsprechende, benutzerseitig bedienbare Steckeinrichtung an dem dem Grundgerät zugeordneten Ende der Anschlussleitung vorzusehen und das Auftrennen der elektrischen Verbindung durch ein Abkoppeln der Anschlussleitung vom Grundgerät hervorzurufen.

Um das Umschalten zwischen einer elektrischen bzw. leitungsgebundenen Verbindung und einer Funkverbindung so einfach wie möglich zu gestalten, wird es als vorteilhaft angesehen, wenn das Grundgerät oder das Handgerät eine Steuereinrichtung aufweist, die überprüft, ob eine elektrische Verbindung zwischen dem Handgerät und dem Grundgerät besteht: Im Falle einer elektrischen Verbindung schaltet die Steuereinrichtung die heiden Funkeinrichtungen ab und im Falle einer Trennung der elektrischen Verbindung schaltet sie die beiden Funkeinrichtungen sofort oder aber zumindest dann ein, wenn ein Telefongespräch zu übertragen ist.

Alternativ können entsprechende Steuereinrichtungen sowohl im Grundgerät als auch im Handgerät enthalten sein.

Im Hinblick auf minimale Herstellungskosten und ein ansprechendes Produktdesign wird es als vorteilhaft angesehen, wenn das Telefon lediglich eine einzige Tastatur zur Eingabe von Telefonnummern aufweist; diese Tastatur kann in dem Grundgerät oder dem Handgerät untergebracht sein. Mit Blick auf einen höheren Bedienungskomfort wird es aJs vorteilhaft angesehen, wenn die Tastatur ausschließlich in dem Grundgerät untergebracht ist; denn bei dem Grundgerät kann der Abstand der Tasten zueinander größer gewählt werden als bei dem gegenüber dem Grundgerät vorzugweise deutlich kleineren Handgerät. Trotz des fehlens einer Tastatur kann das Handgerät dennoch verwendet werden, um Telefonate anzunehmen und Telefonate zu führen; lediglich das Anwählen von Telefonnummern bzw. das selbständige Anrufen anderer Gesprächsteilnehmer ist ohne eine Belätigung des Grundgeräts nicht möglich.

Da Funkeinrichtungen üblicherweise eine gewisse Zeitspanne brauchen, um einen vollständigen Verbindungsaufbau herbeizuführen, wird es als vorteilhaft angesehen, Wenn der Aufbau einer Verbindung vor oder nach einem Abkoppeln der elektrischen Anschlussleitung auch manuell ausgelöst werden kann. Dies lässt sich besonders einfach und damit vorteilhaft durchführen, wenn das Handgerät und/oder das Grundgerät mit einer Starttaste ausgestattet werden, mit der sich der Aufbau der Funkverbindung benutzerseitig manuell traggern lässt.

In entsprechender weise kann auch eine Stopptaste vorgesehen werden, mit der sich eine Unterbrechung der Funkverbindung und ein Rückschalten auf eine elektrische Signalübertragung über die elektrische Anschlussleitung manuell auslösen lässt.

Die Starttaste und die Stopptaste können beispielsweise durch ein einziges Bedienelement gebildet sein, das bei einer Bedienung während des Funkbetriebs diesen abschaltet und bei einer Bedienung bei ausgeschaltetem Funkbetrieb diesen einschaltet.

Ist ein manueller Auf- und Abbau der Funkverbindung mittels Start- und Stopptaste vorgesehen, kann mit Blick auf eine Kostenreduktion die bereits erwähnte Steuereinrichtung zum automatischen Umschalten auch weggelassen werden.

Wie bereits erwähnt, kann das Handgerät derart ausgestaltet sein, dass eine vollständige Tastatur zur Eingabe von Telefonnummern fehlt.; in diesem Fall wird es als vorteilhaft angesehen, wenn das Handgerät eine Eingabevorrichtung, beispielsweise eine Bedientaste, aufweist, und zwar eine solche, mit der sich eine Rufannahme und eine Ruftrennung auslösen lässt. Zusätzlich zu der Bedientaste kann das bereits erwähnte Bedienelement zum Ein- und Ausschalten der Funkverbindung vorhanden sein. Die Eingabevorrichtung und das Bedienelement können - wie bereits erwähnt - beispielsweise tastenbasiert ausgebildet sein; alternativ können auch beliebige andere Eingabekonzepte Anwendung finden, beispielsweise auf der Basis von optischen Sensoren, Bilderkennungseinrichtungen, Spracherkennungseinrichtungen und/oder einem Gravitationssensor, der Stöße an das Gehäuse des jeweiligen Geräts (Hand- bzw. Grundgerät) erkennt und entsprechend auswertet.

Um dem Benutzer des Telefons zu signalisieren, dass eine Funkverbindung zwischen dem Handgerät und dem Grundgerät besteht, wird es als vorteilhaft angesehen, wenn das Handgerät und/oder das Grundgerät mit einer optischen Signalisierungseinrichtung ausgestattet werden, die das Bestehen einer Funkverbindung zwischen dem Handgerät und dem Grundgerät anzeigt, Eine solche optische Signaliserungseinrichtung kann beispielsweise baulich in dem Bedienelement bzw. der Start- und/oder Stopptaste, mit der sich - wie bereits erwähnt. - der Auf- bzw. Abbau der Funkverbindung benutzerseitig manuell triggern lässt, integriert sein.

Das Grundgerät kann prinzipiell sehr unterschiedliche Ausführungsformen aufweisen: Beispielsweise kann das gesamte Grundgerät in einem einzigen Gehäuse untergebracht sein und zum Beispiel ein so genanntes Tischgerät bilden. Alternativ kann das Grundgerät auch durch ein "verteiltes System" gebildet sein und eine Vielzahl räumlich verteilter Komponenten umfassen. Vorzugsweise umfasst das Grundgerät beispielsweise eine Anschlusseinrichtung und ein damit in Verbindung stehendes Funknetzwerk, wobei die elektrische Anschlussleitung an die Anschlusseinrichtung angeschlossen ist, das Funknetzwerk zumindest zwei Funkeinrichtungen umfasst, von denen eine jede geeignet ist, eine Funkverbindung zu dem Handgerät zu unterhalten, und das Funknetzwerk die Schnittstelle zum Anschluss an das Telekommunikationsnetz aufweist.

Vorzugsweise umfasst das Grundgerät eine Vielzahl an Anschlusseinrichtungen, die jeweils mit dem Funknetzwerk in Verbindung stehen und jeweils mit einem Handgerät verbindbar sind. Dies ermöglicht einen besonders großen Bedienungskomfort, weil der Benutzer an verschiedenen Orten auf eine Anschlusseinrichtung zugreifen kann, um mit einem, insbesondere mit seinem "eigenen", Handgerät funkfrei auf elektrischem Wege zu telefonieren; denn er braucht dafür nur sein Handgerät mit der jeweils nächsten Anschlusseinrichtung zu verbinden.

Vorzugsweise umfasst dass Telefon für jede Anschlusseinrichtung jeweils ein Handgerät.

Die Schnittstelle des Grundgeräts zum Anschluss an das Telekommunikationsnetz kann beliebig ausgestaltet sein, beispielsweise als Funkschnittstelle oder als schnurgebundene Schnittstelle.

Im Hinblick auf eine Nutzung des Telefons nach dem sogenannten Internetprotokoll wird es als vorteilhaft angesehen, wenn die Schnittstelle zum Anschluss an das Telekommunikationsnetz durch eine Netzwerk-Schnittstelle gebildet ist, die nach dem IP-Protokoll arbeitet bzw. mit diesem kompatibel ist.

Die Erfindung bezieht sich außerdem auf ein Handgerät, das zum Anschluss an ein Grundgerät eines Telefons geeignet ist.

Erfindungsgemäß ist diesbezüglich vorgesehen, dass das Handgerät eine Lautsprechereinrichtung und ein Mikrofon aufweist, wobei das Handgerät an das Grundgerät über eine elektrische Anschlussleitung elektrisch anschließbar ist, um über diese Sprachsignale von dem Handgerät zu dem Grundgerät und umgekehrt auf elektrischem Wege zu übermitteln, und wobei das Handgerät zumindest eine Funkeinrichtung aufweist und geeignet ist, eine Funkverbindung mit dem Grundgerät zu unterhalten und - im Falle einer Auftrennung der elektrischen Verbindung zwischen dem Handgerät und dem Grundgerät - die Sprachsignale von dem Handgerät zu dem Grundgerät und umgekehrt über die Funkverbindung zu übermitteln.

Die Erfindung bezieht sich darüber hinaus auf ein Grundgerät, das zum Anschluss an ein Handgerät eines Telefons geeignet ist.

Erfindungsgemäß ist diesbezüglich vorgesehen, dass das Grundgerät mit einer Schnittstelle zum Anschluss an ein Telekommunikationsnetz ausgestattet ist und mit dem Handgerät des Telefons über eine elektrische Anschlussleitung elektrisch verbindbar ist, um über diese Sprachsignale von dem Handgerät zu dem Grundgerät und umgekehrt auf elektrischem Wege zu übermitteln, wobei das Grundgerät zumindest eine Funkeinrichtung aufweist, die geeignet ist, eine Funkverbindung zu dem Handgerät herzustellen und - im Falle einer Auftrennung der elektrischen Verbindung zwischen dem Handgerät und dem Grundgerät - die Sprachsignale von dem Handgerät zu dem Grundgerät und umgekehrt über die Funkverbindung zu übermitteln.

Die Erfindung bezieht sich im Übrigen auf ein Verfahren zum Betreiben eines Telefons mit einem Grundgerät mit einer Schnittstelle zum Anschluss an ein Telekommunikationsnetz und einem Handgerät, das eine Lautsprechereinrichtunq und ein Mikrofon aufweist.

Erfindungsgemäß ist diesbezüglich vorgesehen, dass das Handgerät und das Grundgerät über eine elektrische Anschlussleitung miteinander elektrisch verbunden werden, um über diese Sprachsignale von dem Handgerät zu dem Grundgerät und umgekehrt auf elektrischem Wege zu übermitteln, und dass im Falle einer Auftrennung der elektrischen Verbindung zwischen dem Handgerät und dem Grundgerät - die Sprachsignale von dem Handgerät zu dem Grundgerät und umgekehrt über eine Funkverbindung zwischen dem Handgerät zu dem Grundgerät übermittelt werden.

Die Erfindung wird nachfolgend anhand zweier Ausführungsbeispiele näher erläutert; dabei zeigen beispielhaft:
- Figur 1: ein erstes Ausführungsbeispiel für ein erfindungsgemäßes Telefon mit einem einteiligen Grundgerät und
- Figur 2: ein zweites Ausführungsbeispiel für ein erfindungsgemäßes Telefon mit einem mehrteiligen Grundgerät, das ein Grundsystem mit einem Funknetzwerk bildet.

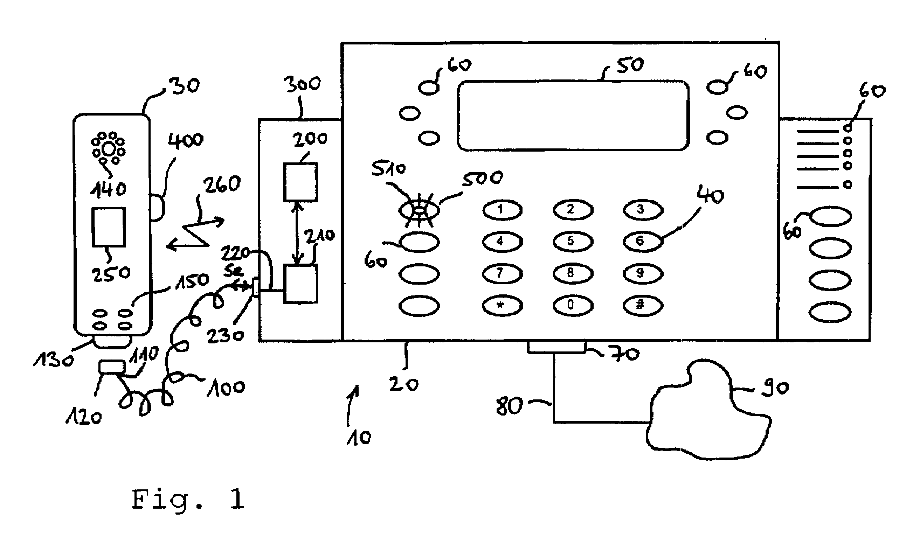

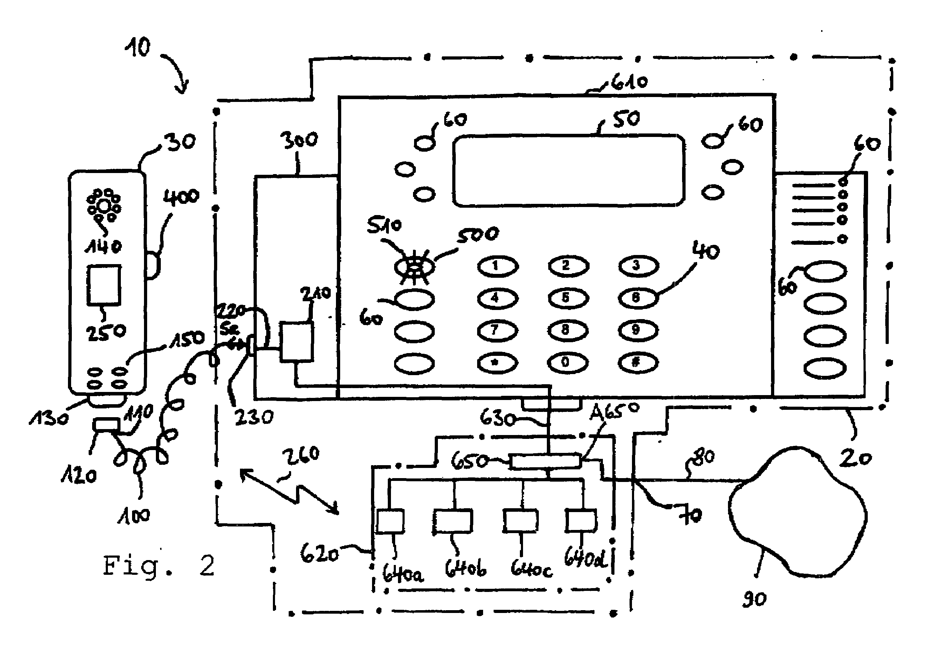

In den Figuren 1 und 2 werden der Übersichtlichkeit halber für identische oder vergleichbare Komponenten stets dieselben Bezugszeichen verwendet.

In der Figur 1 erkennt man ein Telefon 10, das aus einem Grundgerät 20 sowie einem Handgerät 30 besteht. Das Grundgerät 20 weist eine Tastatur 10, ein Display 50 sowie eine Vielzahl an Funktionstasten 60 auf, mit der sich das Telefon 10 bedienen lässt. Das Grundgerät 20 ist bei dem Ausführungsbeispiel gemäß der Figur 1 einteilig ausgeführt und in einem einzigen Gehäuse untergebracht.

Das Grundgerät 20 ist mit einer Schnittstelle 70 ausgestattet, über die sich das Grundgerät 20 mittels einer elektrischen Schnittstellenleitung 80 an ein in der Figur 1 nur schematisch dargestelltes Telekommunikationsnetz 90 anschließen lässt. Die Schnittstelle 70 kann beispielsweise nach dem Internetprotokoll arbeiten. In diesem Fall ist die Schnittstellenleitung 80 vorzugsweise als DatenleiLung ausgestaltet; die Schnittstelle 70 kann beispielsweise nach dem Ethernet-Standard arbeiten.

Das Grundgerät 20 ist über eine Anschlussleitung 100, bei der es sich beispielsweise um eine elektrische Spiralschnur handeln kann, mit dem Handgerät 30 verbunden. Das dem Handgerät 30 zugeordnete Leitungsende 110 der Anschlussleitung 100 ist mit einer Steckeinrichtung 120 ausgestattet, die sich in eine Gegensteckeinrichtung 130 des Handgerätes einstecken lässt, um eine elektrische Verbindung zwischen dem Handgerät 30 und dem Grundgerät 20 hervorzurufen.

Wie sich in der Figur 1 darüber hinaus erkennen lässt, ist das Handgerät 30 mit einer Lautsprechereinrichtung 140 sowie mit einem Mikrofon 150 ausgestattet, so dass sich Sprache bzw. Audiosignale in das Handgerät 30 eingeben und aus diesem ausgeben lassen. Die entsprechenden elektrischen Audio- bzw. Sprachsignale lassen sich über die Anschlussleitung 100 zu dem Grundgerät 20 und/oder umgekehrt übermitteln.

Das Grundgerät 20 weist darüber hinaus eine Funkeinrichtung 200 auf, die über eine Steuereinrichtung 210 des Grundgeräts 20 angesteuert wird. Die Steuereinrichtung 210 steht über eine Leitung 220 mit einem Anschluss 230 des Grundgeräts 20 in Verbindung, an den die Anschlussleitung 100 angeschlossen ist.

Die Funkeinrichtung 200 ist geeignet, eine Funkverbindung zu einer Funkeinrichtung 250 herzustellen, die in dem Handgerät 30 integriert ist. Die Funkverbindung ist in der Figur 1 schematisch durch einen Pfeil mit dem Bezugszeichen 260 gekennzeichnet. Die Funkverbindung kann nach einem beliebigen Standard erfolgen, beispielsweise dem DECT-, GSM-, UMTS- oder dem WLAN-Standard.

Darüber hinaus lässt sich in der Figur 1 erkennen, dass das Grundgerät 20 eine Aufnahmeschale aufweist, die derart ausgestaltet ist, dass sich das Handgerät 30 in diese einführen bzw. auf diese auflegen lässt.

Das Telefon 10 gemäß Figur 1 lässt sich wie folgt betreiben:

Befindet sich der Benutzer des Telefons räumlich in der Nähe des Grundgeräts 10, so wird er, um die Strahlenbelastung zu minimieren, das Handgerät 30 vorzugsweise schnurgebunden betreiben und die Steckeinrichtung 120 der Anschlussleitung 100 in die Gegensteckeinrichtung 130 des Handgeräts 30 einführen. Tn diesem Falle besteht eine elektrische Verbindung zwischen dem Handgerät 30 und dem Grundgerät 20, was von der Steuereinrichtung 210, die - wie oben ausgeführt - mit dem Anschluss 230 des Grundgeräts 20 in Verbindung steht, erfasst wird. In diesem Fall erfolgt eine Übertragung der Sprachinformationen zwischen Handgerät 30 und dem Grundgerät 20 ausschließlich auf elektrischem Wege über die elektrischen Sprachsignale Se. Die Funkeinrichtung 200 des Grundgeräts 20 sowie die Funkeinrichtung 250 des Handgeräts 30 werden in diesem Fall ausgeschaltet, so dass keine unnütze elektromagnetische Strahlung erzeugt wird.

Will der Benutzer des Telefons 10 nun die unmittelbare Umgebung des Grundgeräts 20 verlassen und trotzdem telefonisch erreichbar sein oder im Falle einer bereits bestehenden Telefonverbindung mit seinem Gesprächspartner trotzdem verbunden bleiben, so wird er die Steckeinrichtung 120 von der Gegensteckeinrichtung 130 des Handgeräts 30 trennen, so dass er das Handgerät 30 mit sich mitführen kann, ohne durch die Anschlussleitung 100 beeinträchtigt zu sein.

Das Auftrennen der elektrischen Verbindung zwischen der Gegensteckeinrichtung 130 und der Steckeinrichtung 120 wird von der Steuereinrichtung 210 erkannt, so dass diese die Funkeinrichtung 200 aktiviert. Die Funkeinrichtung 200 wird in diesem Fall eine Funkverbindung zu der Funkeinrichtung 250 aufbauen, wie dies in der Figur 1 mit dem Bezugszeichen 260 dargestellt ist. Das Handgerät 30 bleibt somit mit dem Grundgerät 20 in Verbindung, so dass der Benutzer auch weiterhin Telefonate führen kann.

Geht nun ein Telefonanruf beim Grundgerät 20 ein, so wird die Steuereinrichtung 210 über die Funkeinrichtung 200 ein entsprechendes Anrufsignal an die Funkeinrichtung 250 übertragen, was dem Benutzer beispielsweise durch den Lautsprecher 140 oder besser mittels eines separaten, aus Gründen der Übersichtlichkeit in der Figur 1 nicht gezeigten Ruflautsprechers signalisiert wird. In diesem Fall wird der Benutzer cine Bedientaste 400 des Handgeräts 30 aktivieren, um das Telefonat anzunehmen und das Telefongespräch zu führen. Will der Benutzer das Telefonat beenden, so wird er die Bedientaste 400 erneut drücken, wodurch das Telefonat unterbrochen wird.

Bei dem Ausführungsbeispiel gemäß Figur 1 ist das Handgerät 30 ohne eine eigene Tastatur ausgeführt. Selbstverständlich ist es auch möglich, auch beim Handgerät 30 eine eigene Tastatur oder ähnliches vorzusehen, um zu ermöglichen, dass der Benutzer des Handgeräts 30 eigene Telefonnummern wählen und Telefonate mit beliebigen anderen Gesprächsteilnehmern führen kann, wenn er sich im Funkmodus befindet. Anstelle einer Tastatur kann zur Telefonnummerneingabe auch eine andere Eingabekomponente verwendet werden wie beispielsweise ein Gravitationssensor, der der Stöße an das Handgerät ("anschnippsen") registriert und auswertet.

Tn der Figur 1 lässt, sich darüber hinaus ein Bedienelement 500 erkennen, das am Grundgerät 20 vorgesehen ist. Die Funktion des Bedienelements 500 besteht darin, unabhängig davon, ob die Steuereinrichtung 210 ein Auftrennen der Verbindung zwischen der Steckeinrichtung 220 und der Gegensteckeinrichtung 130 erkennt oder nicht, die Funkverbindung 260 zwischen den beiden Funkeinrichtungen 200 und 250 aufzubauen, sobald es bedient, beispielsweise gedrückt, wird. Das Bedienelement 500 kann darüber hinaus auch als Stopplaste arbeiten, wenn es während des Funkbetriebs bedient wird; in diesem Falle wird die bestehende Funkverbindung unterbrochen. Ein dem Bedienelement 500 entsprechendes Bedienelement kann auch bei dem Handgerät 30 vorhanden sein.

Um sicherzustellen, dass ein Funkbetrieb für den Benutzer erkennbar ist, ist außerdem eine optische Signaleinrichtung 510 im Grundgerät 20 und/oder im Handgerät 30 vorgesehen ; diese Signaleinrichtung 510 bildet somit eine Art Warneinrichtung für Funkstrahlen.

Im Hinblick auf minimale Herstellungskosten und ein ansprechendes Design wird die optische Signalisierungseinrichtung 510 beispielsweise durch eine Lampe oder eine Diode gebildet, die innerhalb des Bedienelements 500 integriert ist.

In der Figur 2 erkennt man ein zweites Ausführungsbeispiel für ein erfindungsgemäßes Telefon 10. Bei diesem Ausführungsbeispiel weist das Grundgerät 20 eine Anschlusseinrichtung 610 sowie ein Funknetzwerk 620 auf. Das Funknetzwerk 620 sowie die Anschlusseinrichtung 610 sind über eine Systemleitung 630 miteinander verbunden. Das Grundgerät 20 ist also mehrteilig ausgeführt und bildet somit eine Art Grundsystem.

Wie sich in der Figur 2 erkennen lässt, weist das Funknetzwerk 620 insgesamt vier Funkeinrichtungen auf, die mit den Bezugszeichen 640a, 640b, 640c sowie 640d qekennzeichnet sind. Diese vier Funkeinrichtungen sind an eine Teletonanlage 650 angeschlossen, deren Anschluss A650 die Schnittstelle 70 zum Anschluss an das Telekommunikationsnetz 90 über die Schnittstellenleitung 80 bereitstellt und für die vier Funkeinrichtungen eine Handover-Funktion ermöglicht.

In der Anschlusseinrichtung 610 ist im Unterschied zu dem ersten Ausführungsbeispiel gemäß Figur 1 keine Funkeinrichtung vorhanden.

Das Telefon 10 gemäß Figur 2 lässt sich in ähnlicher Weise wie das Telefon gemäß Figur 1 betreiben. Ist das Handgerät 30 über die Anschlussleitung 100 mit der Anschlusseinrichtung 610 des Grundgerätes 20 verbunden, so werden die Sprachsignale Se von dem Handgerät 30 zur Anschlusseinrichtung 610 des Grundgerätes 20 und umgekehrt auf elektrischem Wege übermittelt. Ist die elektrische Verbindung zwischen dem Handgerät 30 und der Anschlusseinrichtung 610 hingegen unterbrochen, so wird dies von der Steuereinrichtung 210 festgestellt und der Telefonanlage 650 übermittelt. Diese versucht darauthin, eine Funkverbindung 260 zwischen einer der Funkeinrichtungen 640a, 640b, 640c oder 640d und dem Handgerät herzustellen. Alternativ kann die Funkverbindung 260 auch - wie bereits beispielsweise im Zusammenhang mit der Figur 1 erläutert - dadurch hergestellt werden, dass das Bedienelement 500 an der Anschilusseinrichtung 610 oder ein entsprechendes Bedienelement am Handgerät 30 betätigt wird, mit dem die Funkverbindung 260 manuell aufgebaut wird.

Bei dem Ausführungsbeispiel gemäß Figur 2 ist die Steuereinrichtung 210 eine Komponente, die in der Anschlusseinrichtung 610 untergebracht ist. Alternativ ist es auch möglich, die Steuereinrichtung 210 in dem Funknetzwerk 620, beispielsweise in der Telefonanlage 650, vorzusehen. Eine Anordnung der Steuereinrichtung 210 in der Telefonanlage 650 ist insbesondere dann vorteilhaft, wenn an das Funknetzwerk 620 eine Vielzahl an Anschlusseinrichtungen 610 angeschlossen wird. Tn einem solchen Fall kann nämlich die in der Telefonanlage 650 zentral vorgesehene Steuereinrichtung 210 alle Anschlusseinrichtungen 610 überwachen und ggf. funkverbindungen zu den Handgeräten 30 herstellen, wenn zwischen der jeweiligen Anschlusseinrichtung 610 und dem jeweiligen Handgerät 60 keine elektrische Verbindung mehr besteht.

Wie bereits erwähnt, ist in der Anschlusseinrichtung 610 gemäß Figur 2 keine Funkeinrichtung vorhanden; alternativ kann in der Anschlusseinrichtung 610 zusätzlich zu den Funkeinrichtungen 640 a-d des Funknetzwerks 620 ebenfalls eine Funkeinrichtung enthalten sein, beispielsweise eine solche, wie sie in der Figur 1 gezeigt und mit dem Bezugszeichen 200 bezeichnet ist. Vorzugsweise bildet eine solche zusätzliche Funkeinrichtung mit dem Funknetzwerk 620 ein Gesamtfunksystem, das "handoverfähig" ist.

### Bezugszeichenliste

- 10: Telefon
- 20: Grundgerät
- 30: Handgerät
- 40: Tastatur
- 50: Display
- 60: Funktionstasten
- 70: Schnittstelle
- 80: Schnittstellenleitung
- 90: Telekommunikationsnetz
- 100: Anschlussleitung
- 110: Leitungsende
- 120: Steckeinrichtung
- 130: Gegensteckeinrichtung
- 140: Lautsprechereinrichtung
- 150: Mikrofon
- 200: Funkeinrichtung
- 210: Steuereinrichtung
- 220: Leitung
- 230: Anschluss
- 250: Funkeinrichtung
- 260: Pfeil/Funkverbindung
- 300: Aufnahmeschale
- 310: Ladekontakte
- 400: Bedientaste
- 500: Bedienelement
- 510: optische Signaleinrichtung
- 610: Anschulusseinrichtung
- 620: Funknetzwerk
- 630: Systemleitung
- 640a: Funkeinrichtung
- 690b: Funkeinrichtung
- 640c: Funkeinrichtung
- 640d: Funkeinrichtung
- 650: Telefonanlage
- SE: Sprachsignale
- A650: Anschluss

## Patentansprüche

1. Telefon (10) mit einem Grundgerät (20) mit einer Schnittstelle (70) zum Anschluss an ein Telekommunikationsnetz (90) und einem Handgerät (30), das eine Lautsprechereinrichtung (110) und ein Mikrofon (140) aufweist, wobei das Handgerät und das Grundgerät über eine elektrische Anschlussleitung (100) miteinander elektrisch verbindbar sind, um über diese Sprachsignale (Se) von dem Handgerät zu dem Grundgerät und umgekehrt auf elektrischem Wege zu übermitteln,
**dadurch gekennzeichnet, dass**
das Grundgerät und das Handgerät jeweils zumindest eine Funkeinrichtung (200, 2.50, 640a, 640b, 640c, 640d) aufweisen, wobei die Funkeinrichtung (250) des Handgeräts und die Funkeinrichtung (200, 640a, 640b, 640c, 640d) des Grundgeräts geeignet sind, eine Funkverbindung (260) zueinander herzustellen und - im Falle einer Auftrennung der elektrischen Verbindung zwischen dem Handgerät und dem Grundgerät - die Sprachsignale von dem Handgerät zu dem Grundgerät und umgekehrt über die Funkverbindung zu übermitteln.

2. Telefon nach Anspruch 1, **dadurch gekennzeichnet, dass** die Anschlussleitung (100) an einem Leitungsende eine benutzerseitig bedienbare Steckeinrichtung (120) aufweist, mit der sich die Anschlussleitung (100) an das Handgerät anschließen und von diesem trennen lässt.

3. Telefon nach einem der voranstehenden Ansprüche, **dadurch gekennzeichnet, dass** das Grundgerät oder das Handgerät eine Steuereinrichtung (210) aufweist, die überprüft, ob eine e-lektnsche Verbindung zwischen dem Handgerät und dem Grundgerät besteht und im Falle einer elektrischen Verbindung die beiden Funkeinrichtungen abschaltet und im Falle einer Trennung der elektrischen Verbindung die beiden FunkcinrichLungen einschaltet und eine Funkverbindung zwischen dem Handgerät und dem Grundgerät aufbaut, zumindest sobald ein Telefonat zu übermitteln ist.

4. Telefon nach einem der voranstehenden Ansprüche, **dadurch gekennzeichnet, dass** das Telefon eine einzige Tastatur (40) zur Eingabe von Telefonnummern aufweist und dass diese in dem Grundgerät oder in dem Handgerät untergebracht ist.

5. Telefon nach einem der voranstehenden Ansprüche, **dadurch gekennzeichnet, dass** das Handgerät und/oder das Grundgerät mit einem Bedienelement (500) ausgestattet ist, mit dem sich der Aufbau und/oder der Abbau der Funkverbindung benutzerseitig manuell auslösen lässt.

6. Telefon nach einem der voranstehenden Ansprüche, **dadurch gekennzeichnet, dass** das Handgerät ausschließlich eine einzige Eingabevorrichtung (400) aufweist, und zwar eine solche, mit der sich eine Rufannahme und eine Ruftrennung auslösen lässt.

7. Telefon nach einem der voranstehenden Ansprüche, **dadurch gekennzeichnet, dass** das Handgerät und/oder das Grundgerät mit einer optischen Signalisierungseinrichtung (510) ausgestattet ist, die das Bestehen einer Funkverbindung zwischen dem Handgerät und dem Grundgerät anzeigt.

8. Telefon nach einem der voranstehenden Ansprüche, **dadurch gekennzeichnet, dass** das Grundgerät (20) mindestens eine Anschlusseinrichtung (610) und ein damit in Verbindung stehendes Funknetzwerk (620) umfasst,
- wobei die elektrische Anschussleitung (100) an die Anschlusseinrichtung (610) angeschlossen ist,
- wobei das Funknetzwerk (620) zumindest zwei Funkeinrichtungen (640a, 640b, 640c, 640d) umfasst, von denen eine jede geeignet ist, eine Funkverbindung zu dem Handgerät (30) zu unterhalten, und
- wobei das Funknetzwerk (620) die Schnittstelle (70) zum Anschluss an das Telekommunikationsnetz (90) umfasst.

9. Handgerät (30) mit Eignung zum Anschluss an ein Grundgerät (20) eines Telefons (10) nach einem der voranstehenden Ansprüche, **dadurch gekennzeichnet, dass** das Handgerät eine Lautsprechereinrichtung (110) und ein Mikroion (140) aufweist,
- wobei das Handgerät an das Grundgerät über eine elektrische Anschlussleitung (100) elektrisch anschließbar ist, um über diese Sprachsignale (Se) von dem Handgerät zu dem Grundgerät und umgekehrt, auf elektrischem Wege zu übermitteln, und
- wobei das Handgerät zumindest eine Funkeinrichtung (250) aufweist und geeignet ist, eine Funkverbindung (260) mit dem Grundgerät zu unterhalten und - im Falle einer Auftrennung der elektrischen Verbindung zwischen dem Handgerät und dem Grundgerät - die Sprachsignale von dem Handgerät zu dem Grundgerät und umgekehrt über die Funkverbindung zu übermitteln.

10. Grundgerät mit Eignung zum Anschluss an ein Handgerät (30) eines Telefons (10) nach einem der voranstehenden Ansprüche, **dadurch gekennzeichnet,**
- **dass** Grundgerät (20) mit einer Schnittstelle (70) zum Anschluss an ein Telekommunikationsnetz (90) ausgestattet ist und mit einem Handgerät (30) des Telefons über eine elektrische Anschlussleitung (100) elektrisch verbindbar ist, um über diese Sprachsignale (Se) von dem Handgerät zu dem Grundgerät und umgekehrt auf elektrischem Wege zu übermit-Lein,
- wobei das Grundgerät zumindest eine Funkeinrichtung (200, 640a, 640b, 640c, 640d) aufweist, die geeignet ist, eine Funkverbindung (260) mit dem Handgerät herzustellen und - im Falle einer Auftrennung der elektrischen Verbindung zwischen dem Handgerät und dem Grundgerät - die Sprachsignale von dem Handgerät zu dem Grundgerät und umgekehrt über die Funkverbindung zu übermitteln.

11. Verfahren zum Betreiben eines Telefons (10) mit einem Grundgerät (20) mit einer Schnittstelle (70) zum Anschluss an ein Telekommunikationsnetz (90) und einem Handgerät (30), das eine Lautsprechereinrichtung (110) und ein Mikrofon (140) aufweist, **dadurch gekennzeichnet,**
- **dass** das Handgerät und das Grundgerät über eine elektrische Anschlussleitung (100) miteinander elektrisch verbunden werden, um über diese Sprachsignale (Se) von dem Handgerät zu dem Grundgerät und umgekehrt auf elektrischem Wege zu übermitteln, und
- **dass** im Falle einer Auftrennung der elektrischen Verbindung zwischen dem Handgerät und dem Grundgerät die Sprachsignale von dem Handgerät zu dem Grundgerät und umgekehrt, über eine Funkverbindung zwischen dem Handgerät zu dem Grundgerät übermittelt werden.
